# EUROPEAN PATENT APPLICATION

(11) **EP 1 391 387 A2**
(43) Date of publication of application: **25.02.2004**
(21) Application number: 03012992.8
(22) Date of filing: 09.06.2003
(51) Int. Cl.: B65B 55/00, B65B 65/00, F16J 15/46

(54) **Dynamic sealing device for tight passage of variously shaped articles through dividing walls of packaging machines**

(30) Priority: 07.06.2002 IT MO20020157
(71) Applicant: Vignoli, Terenzio, 40128 Bologna (IT)
(72) Inventor: Vignoli, Terenzio, 40128 Bologna (IT)
(74) Representative: Vannini, Mario

(57) **Abstract**

The dynamic seal device, intended for mounting to partitions, enclosures or walls (2) for the passage of bodies of variable shape (3), is composed of a first casing (4) substantially in form of a box with a first open side, a second casing (5) substantially in form of a box with a second open side, the said casings (4,5) facing each other and coupled at their respective openings so as to form a prismatic box-like housing (6), at least one input opening (7) and one output opening (8) for the passage of the said bodies (3) through the said prismatic box-like housing (6) located in the latter, filling devices (9) elastically expandable beyond the said facing first and second open sides, locatable inside the first and second casing and kept in contact over a common plane (P) of contact.

## Description

### Field of application

The present invention concerns a dynamic seal device, for tight insertion of bodies of variable shape through the partitions of packaging machines.

The invention may be used to advantage, for example, in machines or processes for the preparation and packaging of food products or pharmaceuticals in the form of blister packs of variable shape.

### State of the art

In many industries, including food, medical, chemical, electronics, etc., it is frequently necessary to run operations on special products, which require the product to be handled in a controlled atmosphere: it is commonly the case that the operation is to be done in an atmosphere entirely or almost completely free of oxygen, or composed of noble gases, such as neon or argon, such as to require isolation from the external atmosphere when the product being packaged may be hazardous for the operator or the environment.

The production of environments with controlled atmospheres requires the design and construction of machines equipped with especially complex equipment which is consequently costly and not ergonomic.

Indeed, the handling of products in such controlled atmospheres - generally packaging in the widest sense of the term - requires the use, in the most simple case, of airtight silicone sleeves which protrude from the exterior into the environment in question, thus enabling the operator to execute the required handling operations.

Another solution, of greater complexity, requires the use of mechanical arms controlled from the exterior.

The operations which the operator must execute regard in particular the scheduled and occasional maintenance of the plant due to malfunction, as well as the loading of the product and packaging materials into the machinery itself.

This places a premium on the construction of machinery of the highest efficiency such as to minimise operations of this nature, equipped with isolated environments, and dimensioned to contain both the product and its packaging materials.

There are two basic currently established approaches, depending on the type of environment, whether of limited isolation and purity and the use of relatively inexpensive gas, or with extremely high purity and isolation, which corresponds to the use of relatively costly gas.

In the first case, the fact that the product and packaging materials may be stored outside the controlled atmosphere is accepted, and it is understood that they need only be introduced into the controlled atmosphere for the packaging operation itself, via special openings which also allow the gas to escape systematically into the external environment for systematic recycling into the controlled atmosphere.

In the second case, the product, packaging materials and other materials necessary to the process must be placed into the controlled atmosphere environment or cell in such a way as to maintain its total isolation, and are only removed therefrom after packaging.

The limitations and inconveniences of the current art are immediately obvious from the above.

In practice, in the first case, the loss of gas is considerable, of the order of several volumes of the cell per minute, whereas in the second case, as mentioned above, the operability of the machines is complex and extremely limited by the need to maintain the total isolation and hence inaccessibility of not only the operating areas, but also the areas containing the packaging materials, products and packages themselves.

### Presentation of the invention

One major purpose of the present invention is to eliminate the above mentioned inconveniences of the current art by presenting a dynamic seal device, capable of being fitted to enclosures and dividing walls to provide passage for bodies of variable shape so as to enable the introduction of product and packaging materials into controlled atmosphere cells while minimising or completely eliminating the loss of gas therefrom.

This purpose, as well as others which will be made evident in the following, are achieved by a dynamic seal device, capable of being fitted to enclosures and dividing walls to provide passage for bodies of variable shape, characterised by the fact that it is composed of a first box-like casing with its own first open side, a second box-like casing with a second open side, capable of being coupled to the said open side of the said first casing to form in combination a box-like prismatic housing, with at least one input opening and one output opening for the passage of the said bodies through the said prismatic box-like housing, with respective filling devices elastically expandable beyond the said facing first and second open sides, mountable to the said first and second casings and in contact with each other along a common contact plane of the said casings.

### Brief description of the figures

Further advantageous characteristics of the invention are more clearly evident from the detailed description of a preferred, but not exclusive, implementation of a dynamic seal device, capable of being fitted to enclosures and dividing walls to provide passage for bodies of variable shape, given as illustration but without limitation in the attached drawings, in which:

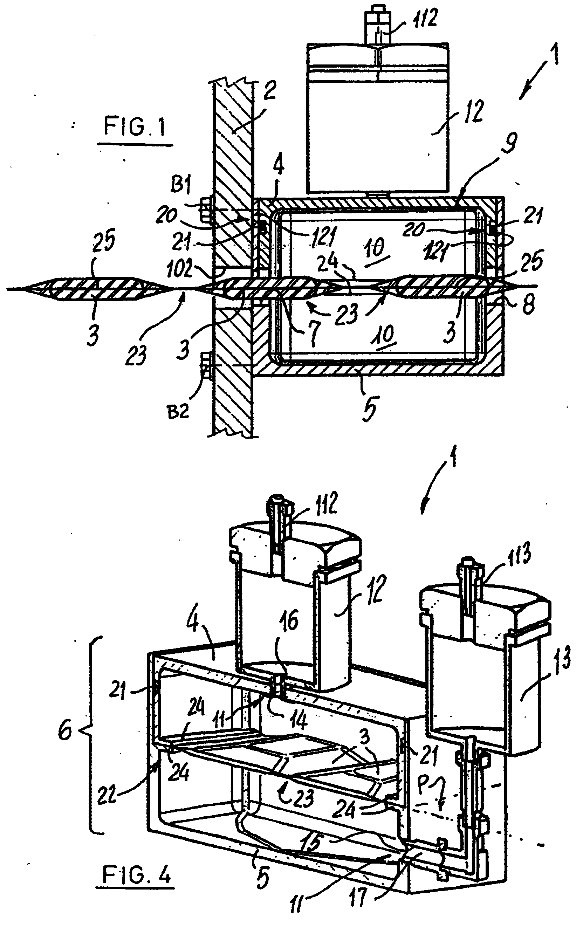

FIG. 1 is a longitudinal sectional view of a dynamic seal device, capable of fitted to an enclosure or dividing wall to provide passage for bodies of variable shape;

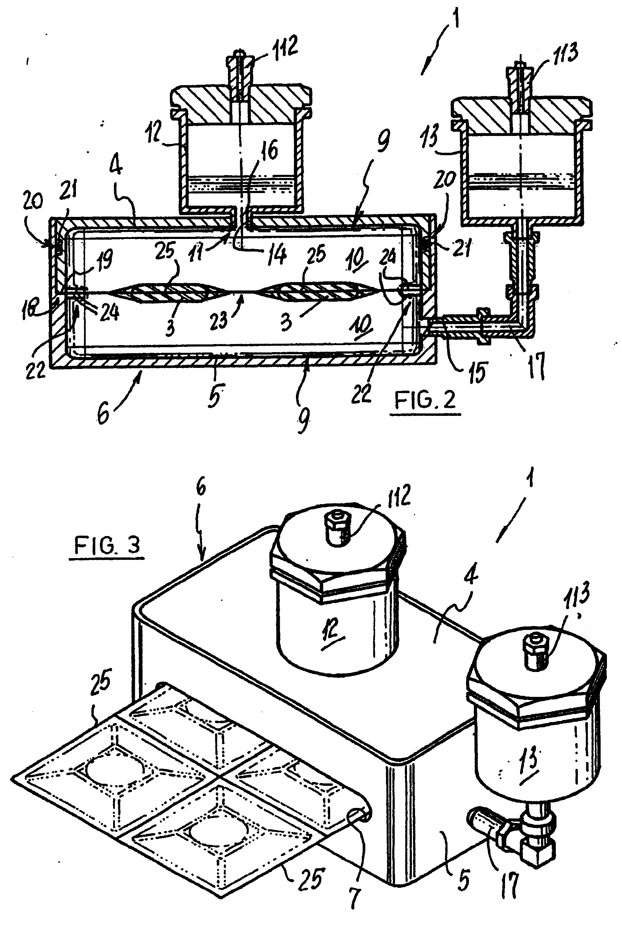

FIG. 2 is a longitudinal sectional view of a dynamic seal device according to the present invention;
FIG. 3 is a schematic perspective view of a dynamic seal device according to the present invention, through which is passing a film containing bodies of variable shape, in this case, tablets;
FIG. 4 is a section plane and perspective view of the dynamic seal device in the configuration of FIG. 3.

### Detailed description of a preferred implementation

With particular reference to the above figures, 1 refers throughout to a dynamic seal device, capable of being bolted tightly, for example with bolts B1 and B2, to walls 2, that is, dividing walls and similar, to provide passage for bodies of variable shape 3, for example, blister packs of freeze dried food products.

The device 1 is essentially composed of a first casing 4 substantially in form of a box with a first open side 4', and a second casing 5 also substantially in form of a box with a second, open side capable of being coupled to the said first open side. The casings 4 and 5 face each other and are coupled at their respective open sides so as to form the prismatic box-like housing indicated in its totality as 6. Housing 6 features at least one input opening 7 and a corresponding output opening 8 for the bodies 3 passing through the prismatic box-like housing 6.

To each of the casings 4 and 5 can be fitted respective filling devices 9 constructed so as to be elastically expandable beyond the said first and second facing open sides; the said filling devices are maintained in constant mutual contact on a common coupling plane indicated by P which coincides, in the preferred implementation, with the plane of contact of the casings 4 and 5.

The filling devices 9 are composed, for each casing 4 and 5, of bladder-like bodies 10 constructed in an elastically deformable material; each bladder-like body 10 contains a calibrated volume of fluid which keeps it dilated.

Furthermore, each bladder-like body 10 is equipped with at least one sealed connection 11 to its respective expansion chamber; the expansion chambers are indicated with 12 and 13 and the connections 11 are composed of through-holes 14 and 15 in the corresponding casings 4 and 5, as well as lines 16 and 17 which can be tightly fitted (for example, by screwing on) to their respective through-holes 14 and 15, with their opposing ends connected tightly to the respective expansion chambers 12 and 13.

In the preferred implementation, the casings 4 and 5 penetrate into each other, with the interposition of stops 18 which provide a contact between the penetrated casing, in this case 5, and the penetrating casing, in this case 4.

Th said stops 18 are composed of at least one shoulder 19 protruding inwards from the internal walls of the penetrated casing 5, against which rests the rim of the corresponding open side of the penetrating casing 4.

The input 7 and output 8 openings are located in opposing walls of the prismatic box-like housing 6, and are aligned with each other, in the case in question horizontally, and substantially orthogonal to the direction of passage of the bodies 3.

The coupling between casing 4 and casing 5 is normally maintained by their own weight, when the bodies of variable shape 3 are passing through the device horizontally.

When required, for example when the bodies of variable shape 3 pass through the device vertically, between the casings 4 and 5 can be fitted stops 20 to block any reciprocal movement between them.

In particular, the said stops 20 are composed of one or more perimeter collars 21, in practice a sort of rubber or elastomer elastic ring, more commonly known as "O-rings", fitted into grooves 121 around the perimeter of at least one of the casings (in this case, in the external surface of the penetrating casing 4) and slightly protruding therefrom, so as to exert pressure against the opposing internal surface of the penetrated casing 5.

The bladder-like bodies 10 are also equipped with guides 22 for strip-like continuous modular packagings 23 for the bodies 3; the said guides 22 are composed of pairs of parallel ridges 24, obtained, for example, by a thickening of the plastic material of which the bladder-like bodies are composed, and which protrude inwards: the lateral edges 25 of the strip-like packagings 23 then run on these.

The said pairs of bilateral ridges 24 are located, in the preferred implementation, substantially in plane with the input 7 and output 8 openings for the bodies 3 passing through the device.

The operation of the dynamic seal device 1, capable of being fitted to enclosures 2 and dividing walls to provide passage for bodies of variable shape 3 according to the invention is explained below with reference, for the purposes of illustration, to bodies 3 in the form of tablets packaged in a strip-like continuous modular packagings 23.

The device 1 is tightly connected, for example by means of bolts B1 and B2, to a wall 2 or partition, at the location of an opening 102 in it, which is used to maintain the separation between two environments with different atmospheres or pressures (or both), and which must maintain the said separation even during the passage through the said wall 2 of bodies of variable shape 3, that is, of a certain thickness, or even only laminar, as in the case in question, packaged in the continuous modular strip 23.

To maintain the tightness between the external and internal (controlled atmosphere) environments, the bladder-like bodies 10 are filled with a fluid so as to dilate them and maintain them in constant mutual contact at the plane P of passage of the said continuous modular strip-like packagings 23, a plane which coincides substantially with the plane of contact between the casings 4 and 5.

The said bodies 3 pass through the prismatic box-like housing 6 by entering via an input opening 7 in one of its walls located at 102 and perpendicular to the direction of passage of the strip-like packagings 23, and exit into the controlled atmosphere via an output opening 8 in the opposing wall; between the openings, the bodies 3 pass through the bladder-like bodies 10 which dynamically mould to their form, thus maintaining the tightness for the entire route.

The variations of volume experienced by the fluid in the bladder-like bodies 10 due to compression during the passage of the bodies 3, are compensated by the expansion chambers 12 and 13, which are equipped with vent valves 112 and 113.

The prismatic box-like housing 6 which constitutes the dynamic seal device 1 is composed of the two interlocking casings 4 and 5, with their respective open sides facing each other: casing 5 is penetrated by casing 4 which slides into the former until it fits snugly against the stop shoulder 19.

The interlocking configuration is normally maintained by the weight of casing 4 itself, when the passage of the bodies of variable shape 3 is horizontal or even inclined.

However, if the contact between the casings 4 and 5 is required to be more secure, for example, when the bodies 3 are moving vertically through the device, it is possible to fit the elastic rings 21 between the casings, in the respective grooves 121 around the external perimeter of the penetrating casing 4: the said grooves 121 are suitably shallower than the transverse section of the rings 21, so that the latter protrude slightly from them and, in pressing against the internal surface of the penetrated casing 5, maintain a secure contact coupling, without thereby complicating disassembly.

The passage of the bodies 3 contained in strip-like packagings 23 is guided by the pairs of ridges 24 protruding inwards from the internal side walls of the prismatic box-like housing 6, between which the edges 25 of the said strip-like packagings 23 are inserted.

The said ridges 24 are preferably constructed by means of local thickening of the same material of which the bladder-like bodies 10 are constructed.

The material of the bladder-like bodies 10 and the volume of fluid contained therein, and consequently the pressure applied dynamically to the bodies 3, will depend on the traction to be applied to the bodies 3, or to the strip-like packagings 23, so as to enable easy passage through the dynamic seal device 1 without however leading to loss of controlled atmosphere via the input and output openings 7 and 8.

It should be noted that the dynamic seal device 1 is easy to maintain, especially as regards the bladder-like bodies 10, by simply sliding casing 4 out of casing 5.

Practical experience has confirmed that the described invention achieves its objectives, in particular

The invention is subject to modification and variations, all of which fall under the protection as stated in the following claims.

Furthermore, all details can be replaced by other technically equivalent details and the materials used, as well as their forms and sizes, can be varied according to need.

## Claims

1. Dynamic seal device, in particular for the tight insertion of bodies of variable shape (3) through dividing walls (2) of packaging machines, **characterised by** the fact that it is composed of a first casing (4) substantially in form of a box with an open side, a second casing (5) substantially in form of a box with an open side, the said casings (4, 5) facing each other and coupled at their openings so as to form a prismatic box-like housing (6), at least one input opening (7) and one output opening (8) for the passage of the said bodies (3) through the said prismatic box-like housing (6) located in the latter, filling devices (9) elastically expandable beyond the said facing open sides, locatable inside the said first (4) and second (5) casing and kept in contact over a common plane (P) of contact.

2. Device according to claim 1 **characterised by** the fact that the said filling devices (9) comprehend, for each of the said casings (4, 5), at least one bladder-like body (10) in elastically deformable material, containing a calibrated volume of fluid which keeps it dilated.

3. Device according to claims 1 and 2 **characterised by** the fact that each of the said bladder-like bodies (10) is equipped with at least one tight connection (11) to a respective expansion chamber (12, 13).

4. Device according to claim 3 **characterised by** the fact that the said connection (11) comprehends: at least one through hole (14, 15) located in the respective casing (4, 5), a segment of line (16, 17) tightly fitting in the said through hole (14, 15) with one end thereof located therein, the opposing end of the said segment of line being tightly connected to the said expansion chamber (12, 13).

5. Device according to claim 1 **characterised by** the fact that the said casings (4, 5) penetrate one into the other with the interposition of a stop (18) forming a contact between the penetrated casing (5) and the penetrating casing (4).

6. Device according to claim 5 **characterised by** the fact that the said stop (18) is composed of at least one shoulder (19) protruding inwards from the centre of the internal wall of the penetrated casing (5), to form a contact surface for the rim of the corresponding opening of the penetrating casing (4).

7. Device according to claims 1 and 6 **characterised by** the fact that the said input (7) and output (8) openings for the passage of the said bodies (3) are located in opposing sides of the said prismatic box-like housing (6), mutually aligned horizontally and substantially orthogonal to the direction of passage of the said bodies (3).

8. Device according to claims 1 and 4 **characterised by** the fact that between the said casings (4, 5) in their interpenetrating configuration may be interposed stops (20) to block their reciprocal motion.

9. Device according to claim 8 **characterised by** the fact that the said stops (20) are composed of at least one tightening collar or perimeter ring (21), fitted between the said penetrated casing (5) and the said penetrating casing (4).

10. Device according to any of the above claims **characterised by** the fact that between the said casings (4, 5) are provided guides (22) for the passage of strip-like packagings (23) of the said bodies (3).

11. Device according to claim 10 **characterised by** the fact that the said guides (22) are composed of pairs of bilateral parallel ridges (24), protruding inwards from the opposing longitudinal internal walls of the said prismatic box-like housing (6), which contain the lateral edges of the said strip-like packagings (23) in their passage through the device.

12. Device according to claims 7, 10 and 11 **characterised by** the fact that the said pairs of bilateral parallel ridges (24) are located substantially in the plane of the said input (7) and output (8) openings for the passage of the said bodies (3).

13. Device according to claim 2 **characterised by** the fact that the said bladder-like bodies (10) are equipped with ribs to lend them rigidity.

14. Device according to claims 11, 12 and 13 **characterised by** the fact that the said bilateral parallel ridges (24) and the said ribs are obtained by means of localised thickening of the material used for the said bladder-like bodies (10).
